# FASCICULE DE BREVET EUROPEEN

(11) **EP 4 051 584 B1**
(45) Date de publication et mention de la délivrance du brevet: **02.12.2026**
(21) Numéro de dépôt: 20793423.3
(22) Date de dépôt: 27.10.2020
(51) Int. Cl.: B64C 25/60, F16F 9/32, F16F 9/342

(54) **POINTEAU DE DOSAGE POUR AMORTISSEUR DE TYPE OLEOPNEUMATIQUE**
DOSIERNADEL FÜR OLEO-PNEUMATIC-STOSSDÄMPFER
METERING NEEDLE FOR OLEO-PNEUMATIC-TYPE SHOCK ABSORBER

(30) Priorité: 29.10.2019 FR 1912123
(43) Date de publication de la demande: 07.09.2022
(73) Titulaire: Safran Landing Systems, 78140 Vélizy-Villacoublay (FR)
(72) Inventeur: LECLERCQ, Sylvain, 77550 MOISSY-CRAMAYEL (FR); JOUBERT, Mathieu, 77550 MOISSY-CRAMAYEL (FR); LECUYER, Franck, 77550 MOISSY-CRAMAYEL (FR); ROIRAND, Quentin, 77550 MOISSY-CRAMAYEL (FR)
(74) Mandataire: Cabinet Boettcher
(86) Numéro de dépôt international: PCT/EP2020/080206
(87) Numéro de publication internationale: WO 2021/083913

(56) Documents cités:
- EP-A2- 1 300 264
- WO-A1-2013/075210
- DE-A1- 102004 061 989
- FR-A1- 2 999 528
- FR-A1- 2 999 529

## Description

La présente invention concerne le domaine de l'amortissement hydraulique et plus particulièrement un pointeau de dosage pour un amortisseur de type oléopneumatique équipant notamment, bien que non exclusivement, des atterrisseurs d'aéronef.

### ARRIERE PLAN DE L'INVENTION

Un atterrisseur d'aéronef comporte en général un amortisseur oléopneumatique qui permet d'assurer la stabilisation et le contrôle des mouvements de l'aéronef, en particulier lors des phases de roulage et d'atterrissage. L'amortisseur oléopneumatique comprend un caisson dans lequel un cylindre est monté pour coulisser. Le cylindre porte à son extrémité inférieure une ou plusieurs roues permettant à l'aéronef de reposer sur le sol.

Le caisson et le cylindre définissent ensemble un volume interne séparé en deux chambres par un diaphragme. L'une des chambres est remplie d'un fluide hydraulique tandis que l'autre chambre est remplie du même fluide hydraulique et d'un gaz sous pression. Le diaphragme comporte un orifice central au travers duquel le fluide hydraulique peut s'écouler.

L'écoulement du fluide hydraulique à travers l'orifice est contrôlé par un pointeau de dosage agencé pour se déplacer à travers ledit orifice lorsque le cylindre coulisse à l'intérieur du caisson.

Le pointeau de dosage comprend traditionnellement une embase depuis laquelle s'étend en saillie une tige reçue à l'intérieur de l'orifice central, l'embase ayant un fond en forme de voûte pour supporter les efforts de pression exercés par le fluide hydraulique.

Le pointeau de dosage est en général réalisé en métal. Néanmoins, la fabrication d'un tel pointeau implique des opérations d'usinage couteuses et longues. Qui plus est, la fabrication par usinage impose des épaisseurs minimales qui empêchent de réduire la masse des pointeaux de dosage en métal, ces derniers étant alors surdimensionnés au vu des efforts qu'elles subissent.

On connaît des pointeaux de dosage réalisés en matière thermoplastique ce matériau offrant donc une diminution de la masse et une réduction des durées et coûts des opérations d'usinage, tout en répondant aux performances mécaniques nécessaires au bon fonctionnement de l'amortisseur. Le document FR2999528 présente un tel pointeau de dosage.

Cependant, si la fabrication par injection permet d'optimiser les formes des pointeaux de dosage pour notamment en diminuer leur masse, elle peut aussi limiter l'amélioration de leurs performances mécaniques. En effet, un pointeau de dosage en matière plastique dont la structure serait optimisée pour en améliorer les performances comporterait des zones confinées qu'il serait difficile voire impossible de réaliser par injection.

### OBJET DE L'INVENTION

L'invention a donc pour objet de proposer un pointeau de dosage permettant d'obvier au moins en partie aux inconvénients précités.

### RESUME DE L'INVENTION

A cet effet, on propose un pointeau de dosage pour amortisseur de type oléopneumatique, comprenant une embase réalisée en matière thermoplastique depuis laquelle s'étend en saillie une tige agencée pour contrôler un écoulement d'un fluide hydraulique à travers un orifice.

Selon l'invention, l'embase a un fond en forme de voûte pour supporter des efforts de pression et dans lequel est rapporté un insert agencé pour renforcer mécaniquement le fond et répartir équitablement les efforts de pression.

L'agencement d'un tel insert permet de repousser les performances mécaniques d'un pointeau de dosage réalisé majoritairement en matière thermoplastique.

De manière particulière, l'insert est en métal, de préférence en acier ou en aluminium.

Selon un premier mode de réalisation de l'invention, l'insert est une douille cylindrique logée dans le fond de l'embase.

Selon une caractéristique particulière, la douille est emmanchée sur une carotte d'injection de l'embase. La carotte d'injection forme dès lors un pion de centrage de la douille dans le fond de l'embase.

De manière particulière, une surface extérieure de la douille coopère avec une surface intérieure d'une couronne de raidissement du fond de l'embase.

Avantageusement, l'embase et la tige appartiennent à une seule pièce réalisée en matière thermoplastique.

Selon un deuxième mode de réalisation de l'invention, l'insert est une fourrure tubulaire traversant l'embase et agencée pour recevoir une extrémité de la tige.

La fourrure permet alors de renforcer à la fois l'emplanture de la tige dans l'embase mais également l'embase elle-même autour de ladite emplanture.

Selon une caractéristique particulière, la tige est reliée à la fourrure via un moyen de fixation amovible comme par exemple une goupille, un jonc, un segment élastique de type « circlip » ou une liaison filetée.

L'invention concerne également un amortisseur de type oléopneumatique comprenant un tel pointeau de dosage.

L'invention concerne aussi un atterrisseur d'aéronef comprenant un tel amortisseur.

L'invention concerne en outre un aéronef comprenant un tel atterrisseur.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1 est une vue en coupe partielle d'un amortisseur d'atterrisseur d'aéronef connu en soi comprenant un pointeau de dosage réalisé en acier ;
- la figure 2 est une vue détaillée du pointeau de dosage illustré à la figure 1 ;
- la figure 3 est une vue détaillée d'un pointeau de dosage selon un premier mode de réalisation de l'invention ;
- la figure 4 est une vue détaillée d'un pointeau de dosage selon un deuxième mode de réalisation de l'invention.

### DESCRIPTION DETAILLEE DE L'INVENTION

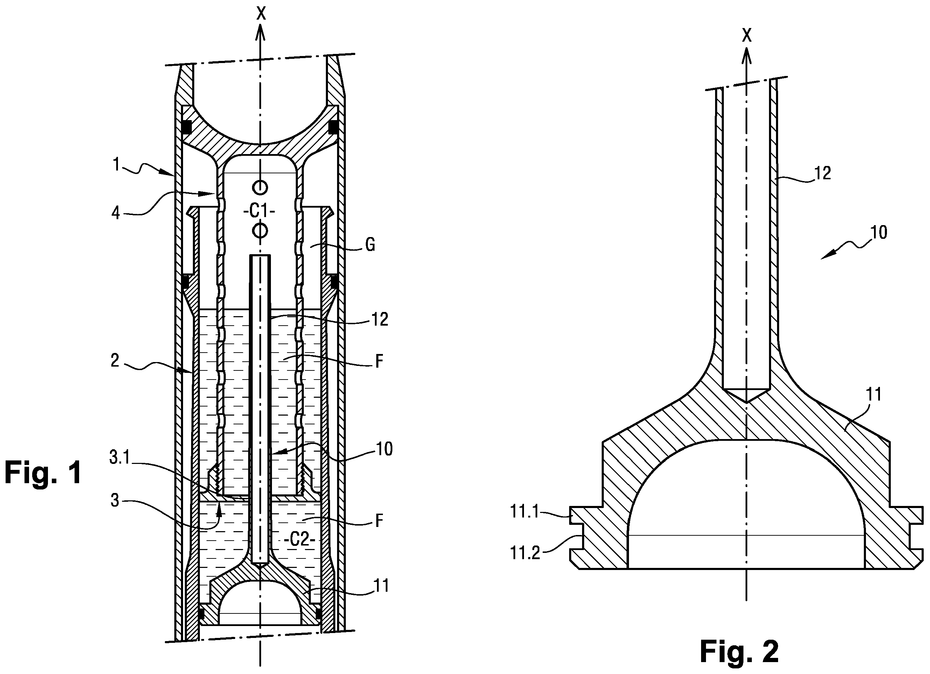

La figure 1 représente un amortisseur d'atterrisseur d'aéronef de type oléopneumatique. De façon connue en soi, l'amortisseur comporte un caisson 1 dans lequel un cylindre 2 est monté pour coulisser selon un axe X vertical entre une position rentrée et une position sortie. Une extrémité inférieure du cylindre 2 est agencée pour recevoir un essieu ou un bogie portant une ou plusieurs roues.

Un diaphragme 3 sépare l'intérieur du cylindre 2 en une première chambre C1 remplie d'un fluide hydraulique F et d'un gaz sous pression et une deuxième chambre C2 remplie du fluide hydraulique F. Le diaphragme 3 est porté par un tube porte-diaphragme 4 dont une extrémité supérieure est directement rapportée sur un plafond du caisson 1.

Le diaphragme 3 est pourvu d'un orifice 3.1 calibré permettant au fluide hydraulique F de s'écouler de la première chambre C1 à la deuxième chambre C2 ou réciproquement, de la deuxième chambre C2 à la première chambre C1.

L'écoulement du fluide hydraulique F à travers l'orifice 3.1 est contrôlé de manière connue en soi par un pointeau de dosage 10. En référence à la figure 2, le pointeau de dosage 10 comporte une embase 11 depuis laquelle s'étend en saillie une tige 12 agencée pour se déplacer à travers l'orifice 3.1 du diaphragme lorsque le cylindre 2 coulisse à l'intérieur du caisson 1.

L'embase 11 a un fond en forme de voûte et comporte une portée cylindrique 11.1 agencée pour pouvoir s'ajuster dans une portée cylindrique homologue ménagée dans le cylindre 2. La portée cylindrique 11.1 comprend une gorge 11.2 pour recevoir un joint d'étanchéité (non représenté).

La tige 12 est ici globalement de forme tronconique ce qui permet de contrôler le débit du fluide hydraulique F traversant l'orifice 3.1 en fonction d'un enfoncement du cylindre 2 dans le caisson 1. En variante, la tige 12 peut comprendre une pluralité d'ouvertures permettant au fluide hydraulique F de traverser la tige 12.

L'embase 11 et la tige 12 appartiennent ici à une seule pièce réalisée en métal.

Tout ceci est bien connu et n'est rappelé que pour mieux faire comprendre l'invention.

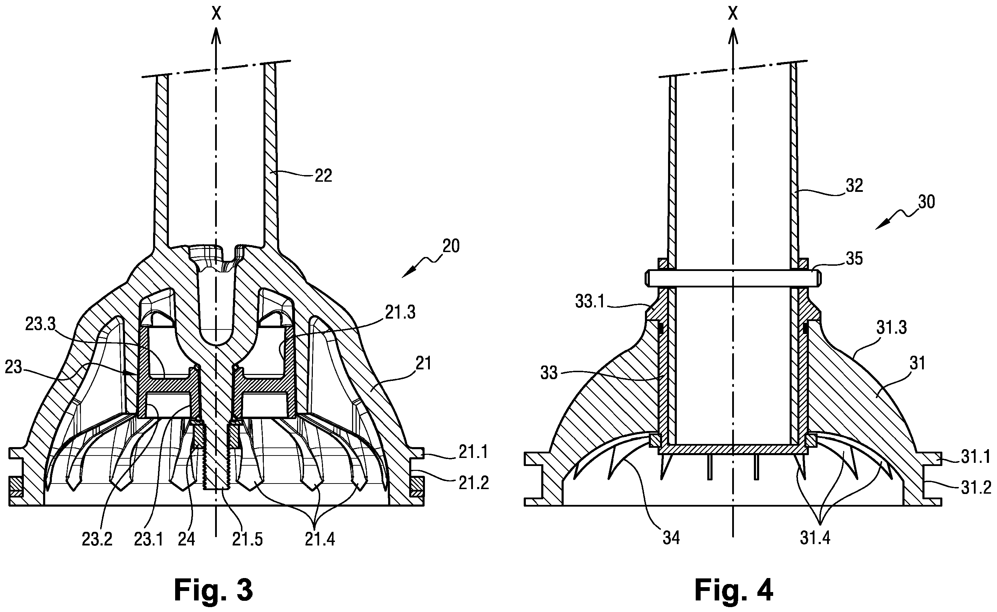

La figure 3 illustre un pointeau de dosage 20 selon un premier mode de réalisation de l'invention. Le pointeau de dosage 20 a une forme générale similaire à celle du pointeau de dosage 10 illustré à la figure 2.

Ainsi, le pointeau de dosage 20 comporte une embase 21 de forme évasée depuis laquelle s'étend en saillie une tige 22 creuse de forme tronconique agencée pour se déplacer à travers l'orifice 3.1 du diaphragme 3 lorsque le cylindre 2 coulisse à l'intérieur du caisson 1.

L'embase 21 comporte une portée cylindrique 21.1 agencée pour pouvoir s'ajuster dans la portée cylindrique homologue ménagée dans le cylindre 2. La portée cylindrique 21.1 comprend une gorge 21.2 destinée à recevoir un joint d'étanchéité (non représenté).

Par ailleurs, l'embase 21 a un fond formant une voûte axisymétrique à convexité tournée vers l'extrémité libre de la tige 22 et consolidée de l'intérieur par un double système de raidissement comprenant, d'une part, une couronne intermédiaire 21.3 centrée sur l'axe X, et d'autre part un réseau de nervures radiales 21.4 reliant la portée cylindrique 21.1 à la couronne intermédiaire 21.3.

L'embase 21 et la tige 22 appartiennent ici à une seule pièce réalisée en matière thermoplastique.

La couronne intermédiaire 21.3 et les nervures radiales 21.4 permettent de stabiliser la voûte qui peut dès lors résister à d'importants efforts de pression, tout en présentant une disposition de matière optimale contribuant à un allègement en masse du pointeau de dosage.

Le pointeau de dosage 20 comprend par ailleurs une douille 23 se logeant à l'intérieur d'un volume intérieur délimité par la couronne intermédiaire 21.3. La douille 23 comprend un tube intérieur 23.1 et un tube extérieur 23.2 coaxiaux l'un à l'autre et reliés entre eux par un voile radial 23.3. Une surface extérieure du tube extérieur 23.2 de la douille 23 est conformée pour coopérer avec une surface intérieure sensiblement tronconique de la couronne intermédiaire 21.3, tandis qu'une surface intérieure du tube intérieur 23.1 de la douille 23 est conformée pour coopérer avec une surface extérieure sensiblement tronconique d'une carotte d'injection 21.5 du pointeau de dosage 20. La carotte d'injection 21.5 s'étend selon l'axe X et forme un pion de centrage sur lequel est emmanchée la douille 23. La douille 23 est fixée sur la carotte d'injection 21.5 via un écrou 24 vissé sur l'extrémité libre de ladite carotte d'injection 21.5 pour venir en appui sur un bord du tube intérieur 23.1 de la douille 23.

La douille 23 est ici réalisée en métal, de préférence en acier ou en aluminium.

La douille 23 forme un insert rapporté dans la voûte du pointeau de dosage 20 et permet une meilleure répartition et reprise des efforts exercés par le fluide hydraulique F et le gaz G sur l'embase 21, notamment lors de la compression de l'amortisseur. La douille 23 permet ainsi d'améliorer les performances mécaniques de l'embase 21 et de la tige 22.

La figure 4 illustre un pointeau de dosage 30 selon un deuxième mode de réalisation de l'invention.

Le pointeau de dosage 30 comporte, de façon similaire au pointeau de dosage 20, une embase 31 de forme évasée réalisée en matière thermoplastique formant un fond formant une voûte axisymétrique. L'embase 31 comprend en partie inférieure, dans sa partie la plus évasée, une portée cylindrique 31.1 externe qui est agencée pour pouvoir s'ajuster dans la portée cylindrique homologue ménagée dans le cylindre 2 et qui comprend une gorge 31.2 destinée à recevoir un joint d'étanchéité (non représenté). L'embase 31 comprend, en partie supérieure, une portée cylindrique 31.3 interne qui est sensiblement coaxiale à la portée cylindrique 31.1 externe et débouche de part et d'autre de l'embase 31. L'embase 31 est consolidée de l'intérieur par un réseau de nervures radiales 31.4 reliant la portée cylindrique 31.1 externe à la portée cylindrique 31.3 interne.

Dans la portée cylindrique 31.3 interne est rapportée une fourrure 33 de forme tubulaire. La fourrure 33 comporte en partie supérieure un épaulement externe 33.1 en appui contre un bord supérieur de la portée cylindrique 31.3 interne, et en partie inférieure une portion filetée agencée pour coopérer avec un écrou 34 venant en appui contre un bord inférieur de ladite portée cylindrique 31.3 interne de manière à solidariser la fourrure 33 à l'embase 31.

La fourrure 33 définit un volume intérieur dans lequel est rapportée une extrémité inférieure d'une tige 32 s'étendant selon l'axe X et destinée à obstruer plus ou moins l'orifice 3.1 du diaphragme 3 en fonction de son enfoncement dans cet orifice. L'extrémité inférieure de la tige 32 coopère avec une surface périphérique interne de la fourrure 33 et est reliée à ladite fourrure 33 par une goupille 35 traversant simultanément, de part en part, la fourrure 33 et l'extrémité inférieure de la tige 32.

La fourrure 33 forme un insert de renforcement mécanique rapporté dans l'embase 31 du pointeau de dosage 30 pour renforcer l'embase 31 et l'emplanture de la tige 32 dans l'embase 31. Il permet une meilleure répartition et reprise des efforts exercés par le fluide hydraulique F et le gaz G sur l'embase 31, notamment lors de la compression de l'amortisseur. Ce renforcement mécanique est amélioré par la présence de la tige 32.

La fourrure 33 et la tige 32 sont ici réalisées en métal, de préférence en acier ou en aluminium.

L'agencement du pointeau de dosage 30 permet, comparé par exemple au pointeau de dosage 10, de réduire la masse du pointeau de dosage et d'en simplifier la fabrication, tout en lui garantissant les performances mécaniques nécessaires au bon fonctionnement de l'amortisseur.

Bien entendu, l'invention n'est pas limitée aux modes de réalisation décrits mais englobe toute variante entrant dans le champ de l'invention telle que définie par les revendications.

Bien que la fourrure soit ici reliée à la tige via une goupille, d'autres types de fixation peuvent être envisagés (vissage, jonc, segment élastique de type « circlip », collage...), amovible ou non.

La géométrie et les dimensions de la douille et de la fourrure peuvent être différentes de celles illustrées.

La fourrure peut avoir ses deux extrémités ouvertes ou l'une de ses extrémités peut être fermée par une paroi formant par exemple une butée axiale pour la tige.

## Revendications

1. Pointeau de dosage (20, 30) pour amortisseur de type oléopneumatique, comprenant une embase (21, 31) réalisée en matière thermoplastique depuis laquelle s'étend en saillie une tige (22, 32) agencée pour contrôler un écoulement d'un fluide hydraulique à travers un orifice, l'embase ayant un fond en forme de voûte pour supporter des efforts de pression et dans lequel est rapporté un insert (23, 33) agencé pour renforcer mécaniquement le fond et répartir équitablement les efforts de pression.

2. Pointeau de dosage (20, 30) selon la revendication 1 dans lequel l'insert (23, 33) est en métal, de préférence en acier ou en aluminium.

3. Pointeau de dosage (20) selon l'une quelconque des revendications précédentes, dans lequel l'insert (23) est une douille cylindrique logé dans le fond de l'embase.

4. Pointeau de dosage (20) selon la revendication 3, dans lequel la douille (23) est emmanchée sur une carotte d'injection (21.5) de l'embase (21).

5. Pointeau de dosage (20) selon la revendication 4, dans lequel une surface extérieure de la douille (23) coopère avec une surface intérieure d'une couronne de raidissement (21.3) du fond de l'embase (21).

6. Pointeau de dosage (20) selon l'une quelconque des revendications précédentes, dans lequel l'embase (21) et la tige (22) appartiennent à une seule pièce réalisée en matière thermoplastique.

7. Pointeau de dosage (30) selon la revendication 1 ou 2, dans lequel l'insert (33) est une fourrure tubulaire traversant l'embase (31) et agencée pour recevoir une extrémité de la tige (32).

8. Pointeau de dosage (30) selon la revendication 7, dans lequel la tige (32) est reliée à la fourrure (33) via un moyen de fixation amovible comme par exemple une goupille (35), un jonc, un segment élastique de type « circlip » ou un pas de vis.

9. Amortisseur de type oléopneumatique comprenant un pointeau de dosage (20, 30) selon l'une quelconque des revendications précédentes.

10. Atterrisseur d'aéronef comprenant un amortisseur de type oléopneumatique selon la revendication 9.

11. Aéronef comprenant un atterrisseur selon la revendication 10.

## Patentansprüche

1. Dosiernadel (20, 30) für einen oleopneumatischen Stoßdämpfer, die eine Basis (21, 31) aus thermoplastischem Material umfasst, von der aus ein Stift (22, 32) hervorsteht, der ausgelegt ist, um einen Durchfluss einer Hydraulikflüssigkeit durch eine Öffnung zu steuern, wobei die Basis einen gewölbten Boden zur Aufnahme von Druckkräften aufweist und in den ein Einsatz (23, 33) eingelassen ist, der ausgelegt ist, um den Boden mechanisch zu verstärken und die Druckkräfte gleichmäßig zu verteilen.

2. Dosiernadel (20, 30) nach Anspruch 1, wobei der Einsatz (23, 33) aus Metall, vorzugsweise aus Stahl oder Aluminium, besteht.

3. Dosiernadel (20) nach einem der vorstehenden Ansprüche, wobei der Einsatz (23) eine zylindrische Hülse ist, die im Boden der Basis sitzt.

4. Dosiernadel (20) nach Anspruch 3, wobei die Hülse (23) auf einen Einspritzzapfen (21.5) der Basis (21) aufgesteckt ist.

5. Dosiernadel (20) nach Anspruch 4, wobei eine Außenfläche der Hülse (23) mit einer Innenfläche eines Versteifungsrings (21.3) am Boden der Basis (21) zusammenwirkt.

6. Dosiernadel (20) nach einem der vorstehenden Ansprüche, wobei die Basis (21) und der Stift (22) aus einem einzigen Stück gefertigt sind, das aus thermoplastischem Material besteht.

7. Dosiernadel (30) nach Anspruch 1 oder 2, wobei der Einsatz (33) eine rohrförmige Hülse ist, die die Basis (31) durchquert und zur Aufnahme eines Endes des Stifts (32) ausgebildet ist.

8. Dosiernadel (30) nach Anspruch 7, wobei der Stift (32) über ein lösbares Befestigungsmittel, wie beispielsweise einen Splint (35), einen Sprengring, ein elastisches Element vom Typ Seegering oder eine Schraubverbindung, mit der Hülse (33) verbunden ist.

9. Oleopneumatischer Stoßdämpfer mit einer Dosiernadel (20, 30) nach einem der vorstehenden Ansprüche.

10. Luftfahrzeug-Fahrwerk mit einem oleopneumatischen Stoßdämpfer nach Anspruch 9.

11. Luftfahrzeug mit einem Fahrwerk nach Anspruch 10.

## Claims

1. Metering needle (20, 30) for an oleo-pneumatic-type shock absorber, comprising a base (21, 31) made of thermoplastic material from which projects a rod (22, 32) arranged to control a flow of a hydraulic fluid through an orifice, the base having an arched bottom to withstand pressure forces and in which is added an insert (23, 33) arranged to mechanically reinforce the bottom and distribute the pressure forces evenly.

2. Metering needle (20, 30) according to claim 1, wherein the insert (23, 33) is made of metal, preferably steel or aluminium.

3. Metering needle (20) according to any one of the preceding claims, wherein the insert (23) is a cylindrical bush housed in the bottom of the base.

4. Metering needle (20) according to claim 3, wherein the bush (23) is press-fitted on an injection sprue (21.5) of the base (21).

5. Metering needle (20) according to claim 4, wherein an outer surface of the bush (23) engages with an inner surface of a stiffening ring (21.3) of the bottom of the base (21).

6. Metering needle (20) according to any one of the preceding claims, wherein the base (21) and the rod (22) belong to one single part made of thermoplastic material.

7. Metering needle (30) according to claim 1 or 2, wherein the insert (33) is a tubular sleeve passing through the base (31) and arranged to receive an end of the rod (32).

8. Metering needle (30) according to claim 7, wherein the rod (32) is connected to the strip (33) via a removable fixing means, like for example a pin (35), a retaining ring, a "circlip"-type elastic segment or a screw thread.

9. Oleo-pneumatic-type shock absorber comprising a metering needle (20, 30) according to any one of the preceding claims.

10. Aircraft landing gear comprising an oleo-pneumatic-type shock absorber according to claim 9.

11. Aircraft comprising a landing gear according to claim 10.
